# EUROPEAN PATENT APPLICATION

(11) **EP 1 406 065 A2**
(43) Date of publication of application: **07.04.2004**
(21) Application number: 03256128.4
(22) Date of filing: 29.09.2003
(51) Int. Cl.: G01C 21/36

(54) **Recording medium storage hierarchical information, device, system, method, and computer program, and recording medium storing such computer program**

(30) Priority: 04.10.2002 JP 2002291842
(71) Applicant: Pioneer Corporation, Tokyo 153-8654 (JP)
(72) Inventor: Uchida, Takayuki, c/o Pioneer Corp., Kawagoe-shi, Saitama 350-8555 (JP)
(74) Representative: Haley, Stephen

(57) **Abstract**

A navigation system that can easily retrieve hierarchically stored pieces of information is provided. When an input operation requesting retrieval of destination information at an operation section (440) of a terminal unit (400) is recognized, retrieval information and item information of map information are acquired from a memory section (320) of a main server unit (300) by way of a communication section (410). Then, a retrieval form acquiring section (483) acquires a retrieval form such as a list display, a numeric keypad template, and a Japanese alphabet template according to the retrieval information to be used to acquire item information stored in different layers of hierarchy so that a display section (450) displays the acquired form. Ultimately, the display section (450) displays POI data located in the lowest layer of hierarchy. Since the item information that is hierarchically stored is associated with retrieval information corresponding to a retrieval form for retrieving the item information, the system can accommodate operations using different pieces of retrieval information to retrieve required item information.

## Description

The present invention relates to a recording medium storing hierarchical information, an information retrieving device, an information retrieving system, an information retrieving method, an information retrieving computer program and a recording medium storing such a computer program.

A navigation apparatus widely known is that provides guide information on a travel route for a vehicle and the like to navigate the vehicle.. Such conventional navigation apparatus is designed to detect a current position of a moving body and define a travel route from the current position to a destination specified and input by a user on the basis of map information stored in a recording medium such as an optical disk. The apparatus then superimposes the travel route on a map shown on a display screen of the apparatus to help the user driving the moving body.

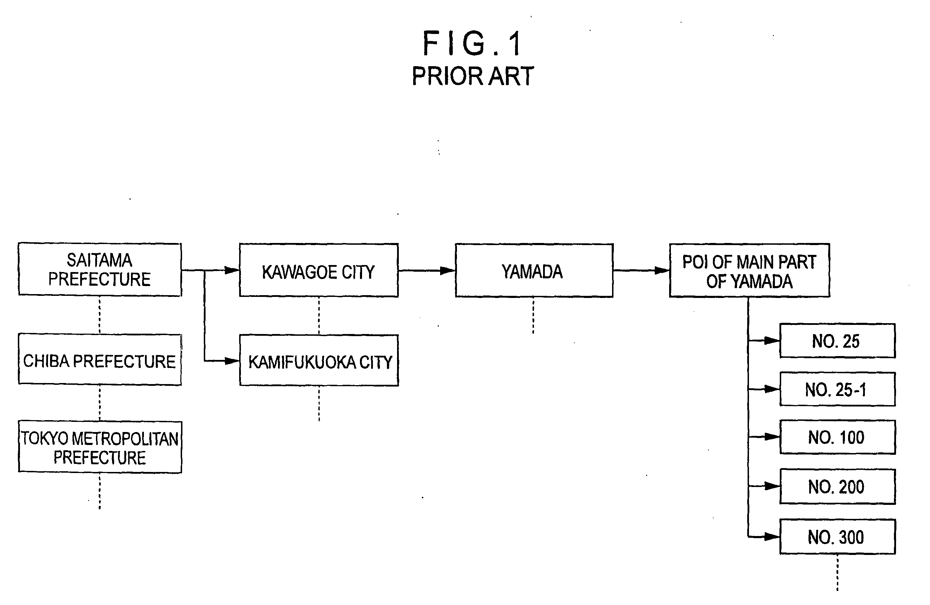

When the user specifies and inputs the destination to the known navigation apparatus in order to define the travel route, the user firstly needs to select one of the prefectures listed on the display screen of the apparatus as illustrated in FIG 1. As a result of the selection, a list of the municipalities of the selected prefecture is displayed. Then, as a result of selecting one of the municipalities, a list of the names of the smaller areas (street names) of the selected municipality is displayed. As a result of selecting one of the smaller areas, a numeric keypad template is displayed to prompt the user to input a house-number (street number). As the house-number of the smaller area is input, the apparatus retrieves information on the spot having the house-number from the map information and specifies the spot information as the destination.

However, known navigation apparatus always requires the user to pinpoint the destination spot, displaying sequentially prefecture names, municipality names and area names, and then prompting to input the house-number of the destination spot to get the spot information. In other words, the user may feel that he or she cannot freely specify and input the destination.

A major object of this invention is to provide a recording medium storing hierarchical information, an information retrieving device, an information retrieving system, an information retrieving method, an information retrieving computer program and a recording medium storing such a computer program that allow a user to retrieve information with ease.

A recording medium according to the present invention, comprising a plurality of pieces of information stored hierarchically and various pieces of retrieval information so related to them as to be used for acquiring pieces of information belonging to lower layers of hierarchy.

An information retrieving device according to the present invention, comprising: a reading section removably carrying a recording medium hierarchically storing the pieces of information and adapted to read information recorded on the recording medium; a retrieval information acquiring section for acquiring pieces of retrieval information stored on the recording medium as a result of reading operation of the reading section; a retrieval form acquiring section for acquiring information on retrieval forms related to the acquired pieces of retrieval information and adapted to prompt a user to select pieces of information belonging to lower layers of hierarchy by means of input operations; and an information selecting section adapted to recognize the pieces of information belonging to lower layers of hierarchy and selected as a result of the input operations using the retrieval forms contained in the acquired retrieval form information and acquire the pieces of information belonging to lower layers of hierarchy in response to the reading operation of the reading section.

An information retrieving device according to the present invention for retrieving and acquiring a plurality of pieces of information stored hierarchically in a memory section, comprising: a retrieval information acquiring section for acquiring various pieces of retrieval information related to the pieces of information in order to acquire pieces of information stored in the memory section and belonging to lower layers of hierarchy; a retrieval form acquiring section for acquiring information on retrieval forms related to the acquired pieces of retrieval information and adapted to prompt a user to select pieces of information belonging to lower layers of hierarchy by means of input operations; and an information selecting section adapted to recognize the pieces of information belonging to lower layers of hierarchy and selected as a result of the input operations using the retrieval forms contained in the acquired retrieval form information and acquire corresponding pieces of information belonging to lower layers of hierarchy.

An information retrieving system according to the present invention, comprising: a memory section hierarchically storing a plurality of pieces of information; and an information retrieving device according to the invention and connected to the memory section by way of a network to retrieve and acquire information stored in the memory section.

An information retrieving system according to the present invention, comprising: a memory section hierarchically storing a plurality of pieces of information; a terminal unit having an input section for specifying and inputting various pieces of information by input operations and a display device adapted to display various pieces of information; and a server unit having a memory section connected to the terminal unit by way of a network so as to be able to transmit and receive various pieces of information and hierarchically storing a plurality of pieces of information, a retrieval information acquiring section for acquiring various pieces of retrieval information related to the pieces of information in order to acquire pieces of information stored in the memory section and belonging to lower layers of hierarchy, a retrieval form acquiring section for acquiring information on retrieval forms related to the acquired pieces of retrieval information and adapted to prompt a user to select pieces of information belonging to lower layers of hierarchy by means of input operations, a display control section for causing the display device of the terminal unit to display the acquired retrieval form and an information selecting section adapted to recognize the pieces of information belonging to lower layers of hierarchy and selected as a result of the input operations at the input section using the retrieval forms displayed on the display device and display the pieces of information belonging to lower layers of hierarchy to the display device.

An information retrieving method according to the present invention, comprising: reading various pieces of retrieval information contained in the pieces of information stored hierarchically in a recording medium and adapted to be used to acquire pieces of information belonging to lower layers of hierarchy; acquiring various retrieval forms related to the read pieces of retrieval information so to be used to prompt a user to select pieces of information belonging to lower layers of hierarchy by means of input operations; and recognizing the pieces of information belonging to lower layers of hierarchy and selected as a result of the input operations using the retrieval forms and acquiring corresponding pieces of information belonging to lower layers of hierarchy from the recording medium.

An information retrieving method according to the present invention for retrieving and acquiring a plurality of pieces of information hierarchically stored by an arithmetic section, comprising: reading various pieces of retrieval information related to the pieces of information so as to be used to acquire pieces of information belonging to lower layers of hierarchy; acquiring retrieval form information on various retrieval forms related to the acquired pieces of retrieval information so to be used to prompt a user to select pieces of information belonging to lower layers of hierarchy by means of input operations; and recognizing the pieces of information belonging to lower layers of hierarchy and selected as a result of the input operations using the retrieval forms of the acquired pieces of retrieval form information and acquiring corresponding pieces of information belonging to lower layers of hierarchy.

According to the present invention, there is provided an information retrieving program for causing an arithmetic section to execute an information retrieving method according to the invention.

According to the present invention, there is provided a recording medium readably storing an information retrieving program so as to be read by an arithmetic section.

In the drawings:-
FIG. 1 is a schematic illustration of a tree structure that is used for retrieving map information in conventional art;
FIG 2 is a schematic block diagram of a navigation system according to an embodiment of the present invention;
FIG 3 is a schematic illustration of a data structure of map information according to the embodiment;
FIG. 4 is a schematic illustration of a tree structure that is used for retrieving map information according to the embodiment;
FIG 5 is a flow chart of operations for retrieving map information according to the embodiment of FIG 2;
FIGS. 6A and 6B are schematic illustrations of retrieving map information by way of displayed lists according to the embodiment,

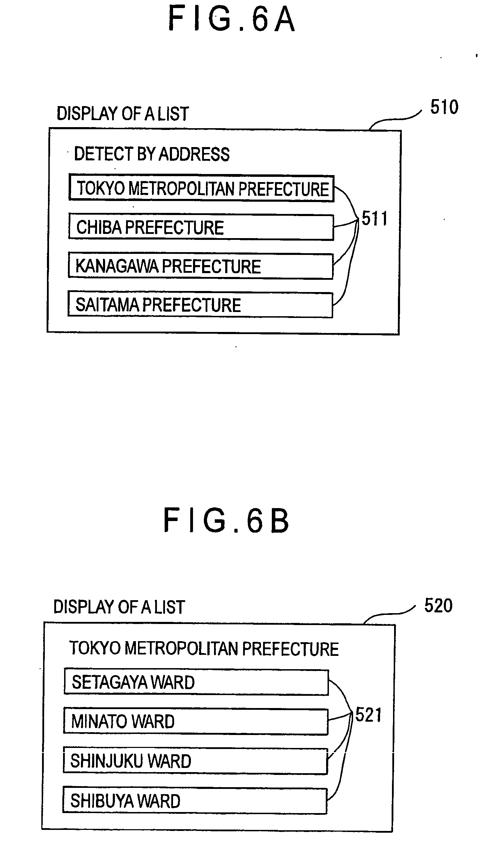

FIG 6A shows a list screen, and
FIG. 6B shows a list screen of a lower layer of hierarchy;

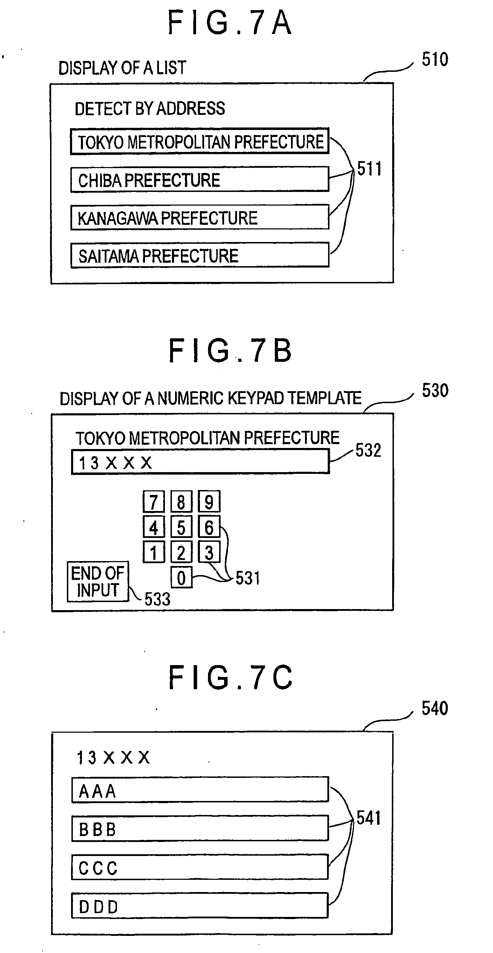

FIGS. 7A, 7B and 7C are schematic illustrations of retrieving map information by way of a numeric keypad template according to the embodiment,
FIG. 7A is a list screen,
FIG. 7B is a numeric keypad screen, and
FIG 7C is a list screen of a lower layer of hierarchy;

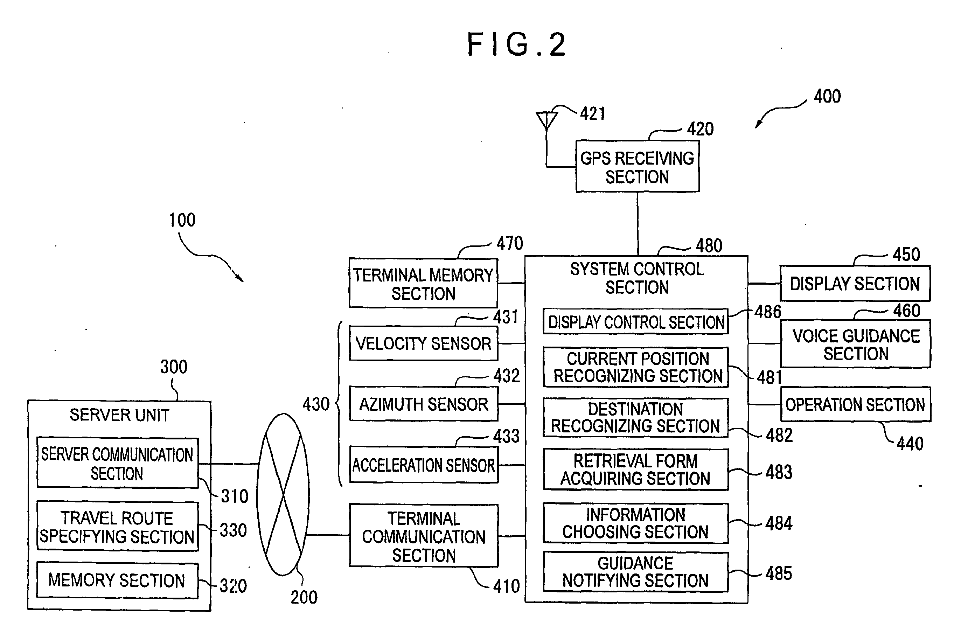

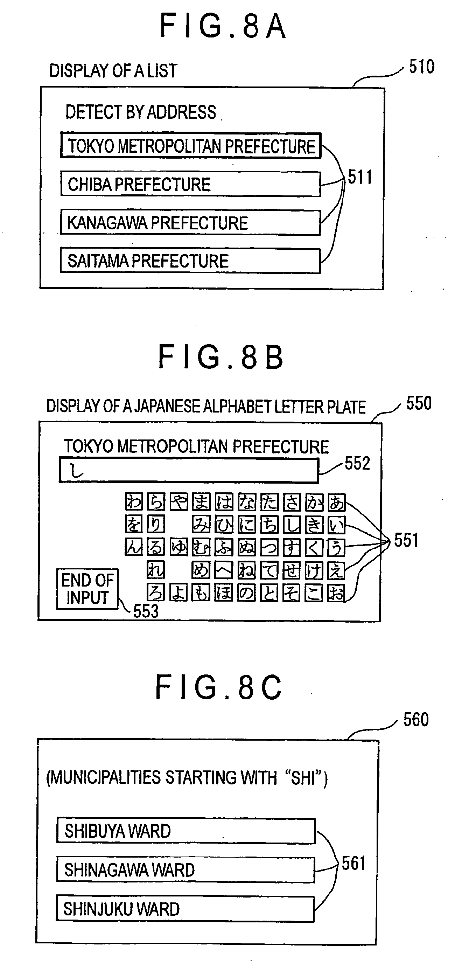

FIGS. 8A, 8B and 8C are schematic illustrations of retrieving map information by way of Japanese alphabet template in the embodiment of FIG. 2, of which
FIG 8A is a list screen,
FIG 8B is a letter input screen, and
FIG 8C is a list screen of a lower layer of hierarchy;

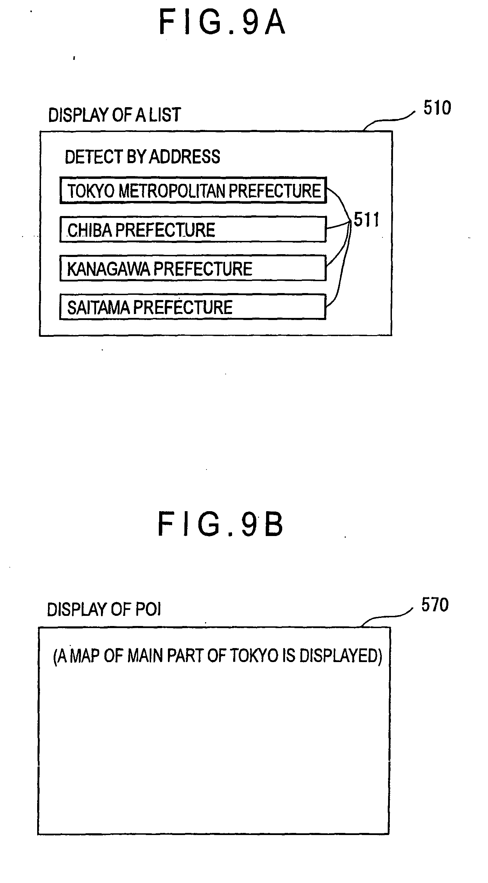

FIGS. 9A and 9B are schematic illustrations of retrieving map information according to the embodiment, of which
FIG 9A is a list screen, and
FIG 9B is a POI data screen.

Now, the present invention will be described in greater detail by referring to the accompanying drawings that illustrate a preferred embodiment of the present invention. The illustrated embodiment is an information retrieving system that is designed as a navigation system. FIG 2 is a schematic block diagram showing the navigation system.

### [Configuration of the Navigation System]

In FIG 2, 100 denotes the navigation system adapted to provide a user with guide information in response to the travel condition of a moving body, which may be a car, an airplane or a boat. The navigation system 100 comprises a network 200, a main server unit 300 and a terminal unit 400 that is a guiding device.

The terminal unit 400 and the main server unit 300 are connected to the network 200 along with other various server units (not shown). The network 200 connects the terminal unit 400 and other various server units to the main server unit 300 so that they can transmit and receive information. The network 200 may be the Internet that is operated on the basis of general purpose protocols such as TCP/IP, an intranet, a LAN (Local Area Network), a communication network and a broadcasting network formed by a plurality of base stations that can exchange information by way of radio media, or a radio media itself that serves for exchanges of information between the direct terminal unit 400, the main server unit 300 and various server units. The radio media that can be used with this embodiment includes electric waves, light beams, sound waves and electromagnetic waves.

The various server units (not shown) may be installed in various administrative offices including the Meteorological Agency, the Metropolitan Police Office, private organizations, the Vehicle Information and Communication System (VICS) and business enterprises to store various pieces of information in an appropriately distributable way. The stored information relates to movements of vehicles that can be utilized when driving cars and may include weather-related information, trade-related information such as information on traffic congestions, traffic accidents, road constructions and shop-related information such as information on gasoline stations, restaurants, cafeterias, etc.

The main server unit 300 can exchange information with the terminal unit 400 and various server units by way of the network 200. The main server unit 300 comprises a server communication section 310, a memory section 320 and a travel route specifying section 330 that is an information selecting section.

The server communication section 310 is connected to the network 200. The server communication section 310 receives information from the terminal unit 400 and/or any of the various server units by way of the network 200 and sends information to the terminal unit 400 and/or any of the various server units.

The memory section 320 readably stores map information and various pieces of information received from the terminal unit 400 and/or any of the various server units. More specifically, the memory section 320 comprises a memory medium (not shown) for storing information and drives/drivers (not shown) that operate as retrieval information acquiring section and also as read section for reading information from and readably storing information in the recording medium. The stored information may be appropriately updated by means of an input device (not shown) arranged at the main server unit 300.

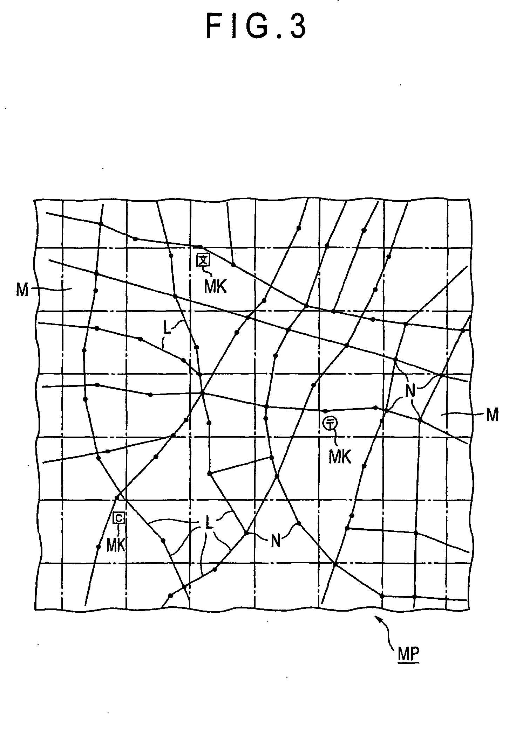

Map information is stored with a data structure as shown in FIG 3. Referring to FIG 3, MP denotes map information that typically includes a plurality of pieces of mesh information M, to each of which a specific number is attached. Each piece of mesh information M is provided with a pair of lengths that are reduced from respective real lengths on the terrain as a function of the reduced scale of the map. The map information MP is formed as vertical and horizontal continuity of pieces of mesh information M.

Each road is defined in the map information MP typically by means of a pair of nodes N (black dots in FIG 3) and a link L that is a line segment connecting the nodes N. A node N in the map information MP may represent an intersection of roads, a bending point of a road, a branching point of roads or a joining point of roads. Information on a node N includes positional information that is geographical spot information telling where the node N is located as expressed in terms of latitude and longitude, a specific number assigned to the node N and branching information telling if the node is an intersection or a branching point where a plurality of links join or not. Information on a link L includes a specific number assigned to the link L (to be referred to as link ID) and node information that may be specific numbers indicating the two nodes N connected by the link L.

The map information MP includes marks MK, each of which indicates a well known place or building, and well known place/building information that is geographical spot information of each of the marks MK including the latitude and the longitude of the mark MK, which indicates a well known place or building. The map information MP also includes name information such as names of intersections.

The map information MP includes a plurality of units of map information MP, which show maps of the same area with different reduced scales. Each of the units of map information MP that show maps with different reduced scales includes node information, link IDs, well known place/building information and name information as described above.

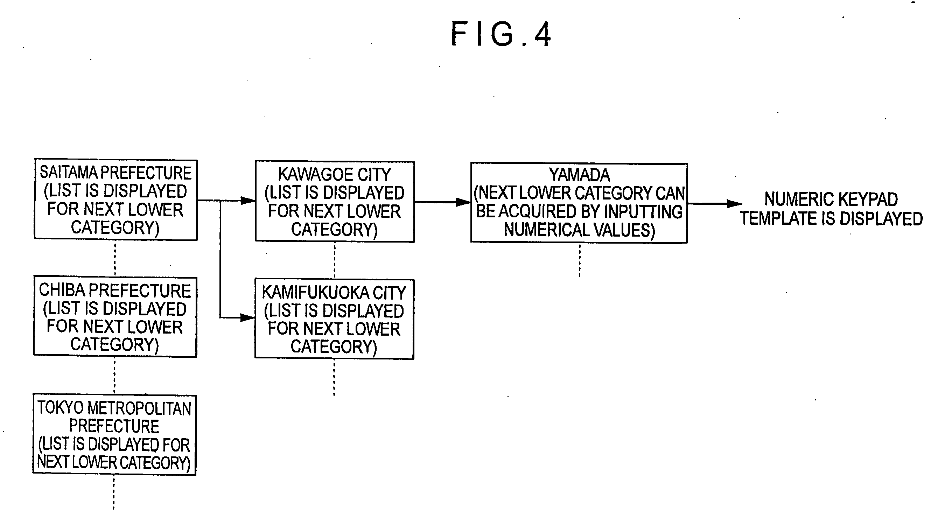

The memory section 320 stores retrieval information to be used for acquiring the geographical spot information of each of the predetermined spots in the map information MP. More specifically, as shown in FIG 4, the memory section 320 stores item information including the names of prefectures, those of the municipalities, those of the smaller areas in a hierarchical form and pieces of retrieval information (as shown in parentheses in FIG. 4), each of which relates to a specific piece of item information so as to be used for acquiring the piece of item information. Note that, in the instance of FIG. 4, the first through third layers are shown in the form of a list and the geographical spot information of the lowest layer is retrieved by using a numeric keypad template. As pointed out above, the item information and the retrieval information can be rewritten by way of an input device (not shown) arranged at the main server unit 300.

The travel route specifying section 330 generates information on travel route, specifying the travel route of the moving body, which may be a vehicle, equipped with the terminal unit 400, from the current position to the destination on the basis of the information acquired by way of the network 200 and the terminal unit 400, which may include information on the current position, information on the destination and information on items necessary for specifying the travel route, and the map information MP stored in the memory section 320. More specifically, the travel route specifying section 330 detects roads opened to traffic on the basis of the map information MP and specifies a travel route that minimizes the travel time or the travel distance and avoids traffic congestions and controlled traffic areas, and generates travel route information.

On the other hand, the terminal unit 400 is mounted on the moving body, which may be a vehicle, and operates as it is powered by the battery of the vehicle, an independent battery dedicated to the terminal unit 400 or some other power supply section. The terminal unit 400 comprises a terminal communication section 410, which is a retrieval information acquiring section, a GPS (Global Positioning System) receiving section 420, a detecting section 430, an operation section 440, which is an input section, a display section 450, which is a display device, a voice guidance section 460, a terminal memory section 470 and a system control section 480, which is an arithmetic section.

The terminal communication section 410 is provided with a communication antenna (not shown) so as to be able to be linked to a base station (not shown) of the network 200 by way of a radio medium and communicate with the base station. The terminal communication section 410 is connected to the system control section 480. The terminal communication section 410 transmits the information acquired from the system control section 480 to the main server unit 300 and/or any of the various server units (not shown) by way of the network 200 under the control of the system control section 480 and receives the information transmitted from the main server unit 300 and/or any of the various server units (not shown) and outputs the received information to the system control section 480. The terminal communication section 410 may not be provided with an antenna so long as it can transmit/receive information to/from the network 200.

A GPS antenna 421 is connected to the GPS receiving section 420. The GPS receiving section 420 receives the electric navigation wave output from the GPS satellite (not shown) that is an artificial satellite by way of the GPS antenna 421. Then, the GPS receiving section 420 calculates the pseudo-coordinate values of the current position on the basis of the received signal and outputs the obtained coordinate values to the system control section 480 as GPS data.

The detecting section 430 detects travel condition of the vehicle. The detecting section 430 comprises a velocity sensor 431, an azimuth sensor 432, an acceleration sensor 433 and so on.

The velocity sensor 431 is arranged on the vehicle and adapted to detect the running speed and the actual acceleration of the vehicle on the basis of a signal that changes in response to the running speed of the vehicle. The velocity sensor 431 typically reads the pulse signal, the voltage value and so on that are generated and output by the revolutions of the axle trees and the wheels of the vehicle. Then, the velocity sensor 431 outputs the detected information on the pulse signal and the voltage value to the system control section 480.

The azimuth sensor 432 is also arranged on the vehicle and comprises a so-called gyro-sensor (not shown) so as to detect the azimuth of the vehicle that indicates the running direction of the vehicle. The azimuth sensor 432 outputs a signal representing the detected information on the running direction of the vehicle to the system control section 480.

The acceleration sensor 433 is also arranged on the vehicle and adapted to detect the acceleration of the vehicle in the running direction thereof. The acceleration sensor 433 converts the detected acceleration into a pulse or a voltage that represents the detected information and outputs to the system control section 480 as sensor output value.

The operation section 440 has various operation buttons (not shown) that are adapted to be used for input operations. The operation buttons are typically employed as input section for specifying the operation of the terminal unit 400. More specifically, the operation buttons may be operated to issue instructions necessary for carrying out a communicating operation, requesting communication and acquisition of information by way of the network, to define the contents of the information to be acquired and the conditions under which information is acquired, to specify the destination, to retrieve information and to display the running condition, or the travel condition, of the vehicle. As any of the operation buttons are operated as input section appropriately, the operation section 440 transmits a corresponding signal to the system control section 480. The operation buttons of the operation section 440 may be replaced by a touch panel that may be arranged at the display section 450 or by a voice input section that is adapted to input various operating conditions.

The display section 450 displays image data provided by the system control section 480 under the control of the latter on its display screen. Image data that are used for the display section 450 typically include map information MP, additional information transmitted from the main server unit 300 and/or any of the various server units, TV image data received by a TV receiver (not shown), and image data stored in a recording medium, which may be an optical disk or a magnetic disk, and read by the related disk drive. Specifically, the display section 450 may be a liquid crystal panel, an organic EL (electroluminescence) panel, a PDP (Plasma Display Panel) or a CRT (Cathode-ray Tube).

The voice guidance section 460 comprises a voicing section such as a loudspeaker (not shown). The voice guidance section 460 typically notifies drivers and passengers of the running direction, the running condition of the vehicle and other information by using the voicing section to provide guidance for driving the vehicle. The voicing section may output audio data received by the TV receiver of the vehicle and those recorded on an optical disk or a magnetic disk. The voice guidance section 460 may comprise a voicing section dedicated to it or utilize the voicing section with which the vehicle is provided.

The terminal memory section 470 comprises a retrieval information acquiring section adapted to readably store information on a recording medium such as an optical disk, a magnetic disk or a memory of some other type and erase information from it and a drive or a driver that also operates as reading section. The terminal memory section 470 stores information acquired by way of the network 200, item information input by operating the operation section 440, music data, image data and so on.

The system control section 480 comprises various input/output ports (not shown) including a communication port connected to the terminal communication section 410, a GPS receiving port connected to the GPS receiving section 420, sensor ports connected respectively to the sensors 431, 432, 433, a key input port connected to the operation section 440, a display section control port connected to the display section 450, a voice control port connected to the voice guidance section 460 and a memory port connected to the terminal memory section 470. The system control section 480 comprises an internal memory (not shown). The internal memory stores various programs that run on the OS (operating system) that controls the overall operation of the terminal unit 400.

The system control section 480 also comprises as various program the current position recognizing section 481, a destination recognizing section 482, a retrieval form acquiring section 483, an information choosing section 484, a guidance notifying section 485, a display control section 486 and so on. The system control section 480 additionally comprises an internal clock so that can acquire time information on the current date and time.

The current position recognizing section 481 recognizes the current position of the vehicle. More specifically, it performs arithmetic operations to obtain a plurality of current pseudo-positions of the vehicle on the basis of the velocity data and the azimuth data output respectively from the velocity sensor 431 and the azimuth sensor 432. Additionally, the current position recognizing section 481 recognizes the current pseudo-coordinate values of the vehicle on the basis of the GPS data on the current position output from the GPS receiving section 420. Then, the current position recognizing section 481 recognizes the current position by comparing the current pseudo-positions obtained by arithmetic operations and the recognized current pseudo-coordinate values and calculates the current position of the vehicle on the map information MP that is acquired independently.

The current position recognizing section 481 determines the slope and the difference of height of the road on which the vehicle is running on the basis of the acceleration data output from the acceleration sensor 433, performs arithmetic operations to obtain the current pseudo-position of the vehicle and recognizes the current position. In other words, it can accurately recognize the current position of the vehicle even if the vehicle is on an intersection with an overpass/underpass or on an elevated road that lies over another road on a two-dimensional view. Furthermore, when running on a mountain road or a sloped road, it can accurately recognize the current position of the vehicle typically by correcting the error that may arise from the travel distance obtained only on the basis of the velocity data and the azimuth data, using the detected slope of the road.

The current position recognizing section 481 can recognize not only the current position of the vehicle as described above but also the starting point, or the originating point, specified and input by way of the operation section 440 as current pseudo-position. Various pieces of information acquired by means of the current position recognizing section 481 are stored in the internal memory of the system control section 480.

The destination recognizing section 482 acquires destination information on the destination specified and input by way of the operation section 440 and recognizes the geographical position of the destination. The acquired destination information may include the coordinate values of the destination that may be expressed in terms of coordinates such as latitude and longitude, and various information such as address and telephone number that may be used to identify the destination. The destination information recognized by the destination recognizing section 482 is stored in the internal memory.

The retrieval form acquiring section 483 acquires various retrieval forms that are related respectively to the corresponding pieces of retrieval information stored in the terminal memory section 470 or the internal memory on the basis of the retrieval information acquired by the terminal communication section 410. As will be described in greater detail hereinafter, retrieval forms include a list screen as a list form to display lists of pieces of item information to be retrieved, a numeric keypad screen as a numeric keypad template adapted to operate as an input plate form for inputting a number associated with a piece of item information to be retrieved, and a letter input screen that is used as a letter template and adapted to operate as an input plate form for inputting letters, which may be Japanese alphabet letters and English alphabet letters, associated with the piece of item information to be retrieved.

The information choosing section 484 recognizes the input operation performed by the user who is selecting and specifying a piece of item information that belongs to a predetermined lower layer on the basis of the retrieval form acquired by using the retrieval form acquiring section 483 and acquires the piece of item information belonging to the lower layer.

The guidance notifying section 485 notifies guidance for the operation of driving the vehicle on the basis of the information on the travel route that has been acquired in advance in response to the running condition of the vehicle, which is guidance for supporting the operation of driving the vehicle, by displaying an image on the screen of the display section 450 and/or by voicing the guidance by way of the voice guidance section 460. For example, the guidance notifying section 485 may display a predetermined arrow or a sign on the screen of the display section 450 and/or the voice guidance section 460 may voice a sentence such as "700 m ahead, turn right at the XX intersection toward YY.", "You have diverted from the route." or "You have traffic congestions ahead."

The display control section 486 controls the display section 450 and displays various pieces of information on the display screen of the display section 450. The retrieval form acquired by the retrieval form acquiring section 483 can also be displayed under the control of the display control section 486.

An information retrieving device according to the present invention comprises a terminal communication section 410, a retrieval form acquiring section 483 and an information choosing section 484. An information acquisition control system according to the present invention comprises the information retrieving device and the memory section 320 of a main server unit 300 connected to it by way of a network 200

### [Operation of the Navigation System]

The operation of the above-described navigation system 100 will be described below by referring to the related drawings. FIG. 2 is a flow chart of the operation of the navigation system for providing guidance.

Firstly, a user, who may be a driver or one of passengers of a vehicle turns on the terminal unit 400 to be powered. As the terminal unit 400 is powered, the system control section 480 controls the display section 450 so as to display a main menu and prompt the user to specify the operation of the terminal unit 400. Then, for instance, the user may specify an operation of detecting a travel route by means of an input operation he or she performs at the operation section 440. The input operation for detecting the travel route is to be performed for the user to acquire information on the desired travel route.

Upon recognizing the input operation for detecting the travel route, the system control section 480 operates to recognize the current position of the vehicle by way of the current position recognizing section 481 and, at the same time, the destination of the vehicle by way of the destination recognizing section 482.

More specifically, by way of the current position recognizing section 481, the system control section 480 acquires information on the current position by calculating the current position of the vehicle on the basis of the velocity data and the azimuth data of the vehicle output respectively from the velocity sensor 431 and the azimuth sensor 432 of the detecting section 430 and the GPS data relating to the current position output from the GPS receiving section 420.

Additionally, the system control section 480 controls the display section 450 so as to prompt the user to input and specify the destination by means of an input operation at the operation section 440. As the user inputs and specifies the destination, following the instruction displayed on the display screen, the destination recognizing section 482 acquires information on the destination that is input and specified by the user. The acquired destination information is then stored in the internal memory.

If the user requests acquisition of geographical spot information on the destination at the time of inputting and specifying the destination at the operation section 440, he or she inputs the request for retrieving geographical spot information, following the instruction also displayed on the display screen of the display section 450. When retrieval of geographical spot information is requested, the system control section 480 controls the terminal communication section 410 so as to acquire retrieval information and item information out of the map information MP stored in the memory section 320 of the main server unit 300. Then, the system control section 480 acquires corresponding retrieval forms sequentially from the item information of the first layer, which is the highest layer, according to the retrieval information and the item information acquired by way of the terminal communication section 410. Then, the geographical spot information on the destination is acquired as a result of an input operation specifying the item information of the lower layers according to the selected retrieval form.

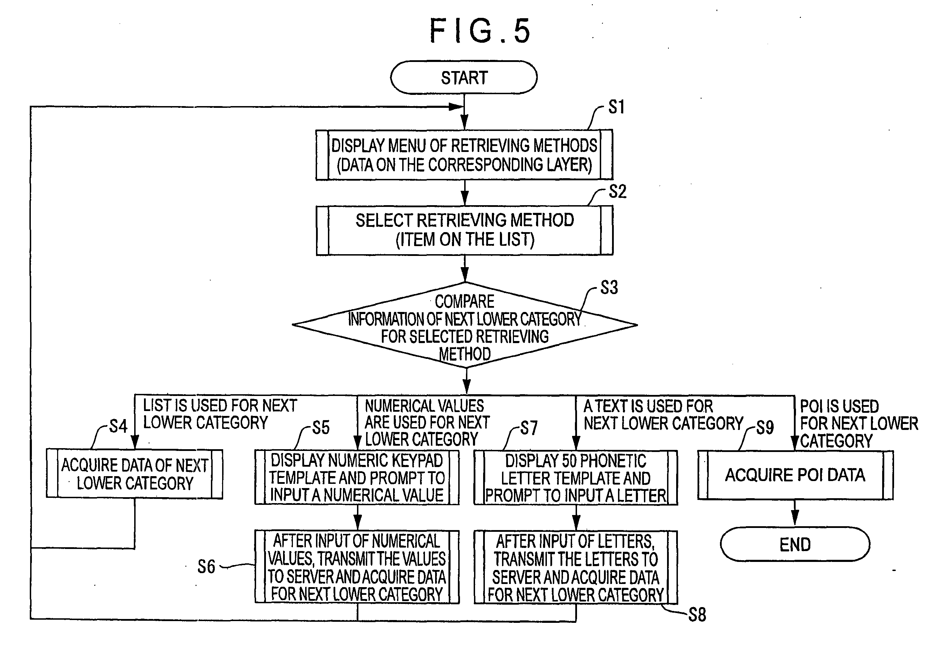

More specifically, geographical spot information is retrieved in a manner as shown in FIG 5. FIG. 5 is a flow chart of the operation of displaying a list of pieces of item information of the first layer in response to a request for retrieving geographical spot information.

Referring to FIG 5, firstly, as the user performs an input operation at the operation section 440 of the terminal unit 400, the system control section 480 recognizes the request for retrieving geographical spot information. Then, in response to the request for retrieving geographical spot information, the system control section 480 controls the terminal communication section 410 so as to acquire retrieval information and item information out of the map information MP stored in the memory section 320 of the main server unit 300. The retrieval information and the item information that are acquired are stored in the terminal memory section 470 or the internal memory. Then, the retrieval form acquiring section 483 of the system control section 480 acquires a corresponding retrieval form according to the retrieval information for acquiring item information of the first layer from the terminal memory section 470 or the internal memory. The acquired retrieval form is displayed on the display screen of the display section 450 of the terminal unit 400 by the display control section 486 (Step S1).

At this time, a list of the names of the prefectures that is the item information of the first layer is displayed according to the retrieval information for displaying a list as shown in FIG 6A. More specifically, according to the retrieval information telling that a list needs to be displayed, the information choosing section 484 reads the item information on the names of the prefectures of the first layer from the terminal memory section 470 or the internal memory and, at the same time, reads the list screen that operates as retrieval form. Then, the display control section 486 displays the item information on the list screen as shown in FIG 6A.

Each of the names of the prefectures is provided with a command button 511 in the list screen 510 so that the user can select one of them. In FIG 6A, the command button 511 of Tokyo Metropolitan Prefectures stressed to show that it is selected. The selected button may be shown in a different way so long as it can be distinguished from the other buttons.

As the user performs an input operation of selecting one of the command buttons 511 and clicking it by operating the operation section 440 (Step S2), the system control section 480 reads the retrieval information, such as the information shown in parenthesis in FIG. 4, related to the item information that corresponds to the selected command button 511. The system control section 480 reads the retrieval information from the terminal memory section 470 or the internal memory that stores it because the retrieval information has been acquired by way of the terminal communication section 410 and stored in the terminal memory section 470 or the internal memory in advance. Thus, the system control section 480 reads the retrieval information necessary for acquiring the information belonging to a lower layer of the selected item information (Step S3).

Thereafter, the retrieval form acquiring section 483 acquires the retrieval form that corresponds to the retrieval information from the terminal memory section 470 or the internal memory. Then, the acquired retrieval form is displayed on the display screen of the display section 450 of the terminal unit 400 by the display control section 486. More specifically, if the retrieval information that is related to the item information that corresponds to the selected command button 511 specifies a list display,, item information of the second layer that is information belonging to a lower layer is displayed on a list. In other words, the retrieval form acquiring section 483 reads the item information of the municipalities of Tokyo Municipality from the terminal memory section 470 or the internal memory, (Step S4) and, at the same time, displays a list of acquirable item information belonging to still a lower layer in the list screen 520 that operates as retrieval form as shown in FIG 6B before it returns to Step S1. In the list screen shown in FIG 6A, each of the municipalities is provided with a command button 521 that corresponds to the item information of the administrative unit as in the case of the list screen 510 of FIG. 6A so that one of the command buttons 521 may be selected.

If the retrieval information tells that a numeric keypad template needs to be used in Step S3, the retrieval form acquiring section 483 reads a numeric keypad screen 530 as shown in FIG 7B as retrieval form from the terminal memory section 470 or the internal memory, and causes the display control section 486 to display it on the display screen of the display section 450. The numeric keypad screen 530 shown in FIG 7B includes command buttons 531 to be used for inputting numerical values, a display window 532 for displaying the input numerical values and a command button 533 for specifying the input numerical values as selected data.

As numerical values are selected and specified on the numeric keypad screen 530 (Step S5), the information choosing section 484 transmits the input numerical values to the main server unit 300 by way of the terminal communication section 410, causes the main server unit 300 to read the item information related to the numerical values and acquires the item information (Step S6) that is read by the main server unit 300. Then, it displays a list of acquirable item information belonging to a lower layer as shown in the list screen 520 that also operates as retrieval form as shown in FIG. 7C before it returns to Step S1. In the list screen 540 shown in FIG 7C, each of the administrative units is provided with a command button 541 that corresponds to the item information of the administrative unit as in the case of the list screens 510 and 520 so that one of the command buttons 541 may be selected.

If the retrieval information tells that a template for the Japanese alphabet letters needs to be used in Step S3, the retrieval form acquiring section 483 reads a letter input screen 550 as shown in FIG. 8B as retrieval form from the terminal memory section 470 or the internal memory, and causes the display control section 486 to display it on the display screen of the display section 450. The letter input screen 550 shown in FIG. 8B includes command buttons 551 to be used for inputting letters, a display window 552 for displaying the input letters and a command button 553 for specifying the input letters as selected data.

As letters are selected and specified on the letter input screen 550 (Step S7), the information choosing section 484 transmits the input letters to the main server unit 300 by way of the terminal communication section 410, causes the main server unit 300 to read the item information related to the letters and acquires the item information (Step S8) that is read by the main server unit 300. Then, it displays a list of acquirable item information belonging to a lower layer as shown in the list screen 520 that also operates as retrieval form as shown in FIG. 8C before it returns to Step S1. In the list screen 560 shown in FIG 8C, each of the administrative units is provided with a command button 561 that corresponds to the item information of the administrative unit as in the case of the list screens 510, 520 and 540 so that the command button 561 may be selected.

Finally, if the retrieval information tells that a map image of map information MP including geographical spot information needs to be displayed in Step S3, the retrieval form acquiring section 483 reads an information disclosure screen 570 as shown in FIG. 9B as retrieval form from the terminal memory section 470 or the internal memory, and acquires POI (Point Of Interest) data, which include map information MP including geographical spot information, stored in the memory section 320 of the main server unit 300 by reading them by way of the terminal communication section 410. Then, it causes to display it on the information disclosure screen 570 (Step S9). In this way, the operation of retrieving map information MP is completed. The POI data are displayed typically as a piece of mesh information M or a combination of several pieces of mesh information M that belong to the map information MP.

When the required map information MP is acquired in a manner as described above, the user appropriately inputs and specifies the geographical spot of the destination, using the operation section 440. For example, the user may specify the geographical spot information of the destination by moving a cursor shown in the information disclosure screen 570. As the spot information is specified, the destination recognizing section 482 of the system control section 480 recognizes the geographical spot information of the destination as information on the destination and stores it in the internal memory or the terminal memory section 470.

Additionally, the system control section 480 controls the display section 450 so as to make it display a screen for prompting the user to input and specify items that are required to detect and define the travel route. As the user inputs and specifies items in response to the displayed screen by operating the operation section 440, the system control section 480 acquires item information relating to the input and specified items. The acquired item information that meets the requirements for detecting and defining the travel route is stored in the internal memory.

Thereafter, the system control section 480 controls the terminal communication section 410 so as to transmit the information on the current position, the information on the destination and the information on the specified items stored in the internal memory to the main server unit 300. Then, the main server unit 300 causes the travel route specifying section 330 to detect travel routes from the current position of the vehicle to the destination on the basis of the information on the current position, the information on the destination and the information on the specified items it has acquired. The travel route specifying section 330 selects several travel routes on the basis of the information on the specified items out of the detected plural travel routes, and acquires information on the selected travel routes that meet the requirements of the user.

Then, the main server unit 300 controls the server communication section 310 on the basis of the information for identifying the terminal unit 400, such as ID number (identification number), that has been transmitted with the information on the specified items, so as to transmit the information on the travel route acquired as a result of detecting the travel route to the terminal unit 400. As the terminal unit 400 receives the information on the travel route, the system control section 480 of the terminal unit 400 stores it in the internal memory or the terminal memory section 470 and causes the display section 450 to display it, superimposing it on the map information MP.

Subsequently, the system control section 480 recognizes the current situation under which the vehicle is moving on the basis of the data output from the velocity sensor 431, the azimuth sensor 432 and the acceleration sensor 433 of the detecting section 430 and the GPS data output from the GPS receiving section 420. Additionally, the system control section 480 notifies the user of guidance information for the vehicle and guides the vehicle to move ahead on the basis of the current situation of the vehicle it has recognized and the information on the travel route acquired from the main server unit 300.

While the vehicle is moving, the guidance notifying section 485 acquires traffic information on the current traffic jams, the construction works and and the current traffic control operations, and weather information. Then, the guidance notifying section 485 provides the user with guidance for driving the vehicle, including information on possible situations that may affect the moving vehicle and/or force the vehicle to change the travel route on the basis of the traffic information and the weather information it has acquired.

As described above, in this embodiment of the invention, the memory section 320 of the main server unit 300 stores information on a plurality of items that are hierarchically arranged, POI data that are map information MP and retrieval information necessary for acquiring information on items that are related to and belong to layers lower than the above cited items and POI data. Then, in response to a retrieval request, the terminal communication section 410 of the terminal unit 400 acquires information on the items belonging to the first layer and retrieval information and the retrieval form acquiring section 483 reads the related retrieval form according to the acquired retrieval information. Then, as a result of recognizing the input operation for selecting an item specified in the retrieval form, the information choosing section 484 acquires information on the lower items of the selected item. In this way, the desired POI data of the lowest layer is acquired by repeating the above process.

Thus, for the purpose of updating the POI data stored in the memory section 320 of the main server unit 300, it is no longer necessary to change the retrieval form for retrieving information from the terminal unit 400 even if the retrieval information corresponding to the retrieval method of using numeric keys, that of using letter keys and/or that of displaying a list for item selection is rewritten and changed. In other words, the required information can be retrieved even if the method of retrieving information is changed. Thus, the terminal unit 400 provides an advantage of retrieving information with ease and operates excellently as general purpose terminal.

Additionally, if each piece of item information is provided with a plurality of data structures as shown in FIG 4 that are adapted to store item information and POI data for each retrieval method of retrieving information on each item and POI data and hence pieces of retrieval information are related to each piece of item information, it will be possible to input and specify the retrieval method for each data retrieving operation that may be conducted in any of the layers by means of the terminal unit 400. Then, the ability of retrieving information will be greatly improved and the operation of retrieving information will be remarkably facilitated.

The list screens 510, 520, 540, 560, the numeric keypad screen 530 and the letter input screen 550 are used as retrieval forms. With this arrangement, information retrieving operations are greatly facilitated and the volume of retrieval information that correlates pieces of item information is reduced to a minimal level necessary to read retrieval forms. Thus, the workload of processing operations is reduced while the speed of processing operations is raised when retrieving information. Additionally, the necessary volume of information is minimized. Furthermore, the design freedom is improved because it is possible to make the terminal unit 400 and/or the memory section 320 store retrieval forms in a manner as described above.

The display control section 486 causes the display section 450 to display a retrieval form and prompt the user to input and specify an item necessary for retrieving information. With this arrangement, it is possible to use the list screens 510, 520, 540, 560, the numeric keypad screen 530 and the letter input screen 550 as retrieval forms that require only a relatively small amount of data.

The memory section 320 stores various pieces of information for centralized management of the information and the terminal unit 400 acquires the information by way of the network 200. With this arrangement, by just updating the information stored in the memory section 320, a number of terminal units 400 can acquire the updated information. Therefore, the scope of utilization of the system will be expanded.

Additionally, map information is utilized as information to be retrieved by the navigation system 100 so that it can be retrieved efficiently in order to provide guidance of notifying the user of the situation under which the vehicle is moving. In other words, a navigation system can be effectively configured in such a way that the user can retrieve map information for obtaining guidance of notifying him or her of the situation under which the vehicle is moving.

Still additionally, the embodiment is so configured that the user acquires information in the first layer and sequentially acquires information in the lower layers by means of the terminal communication section 410. With this arrangement, the time period necessary for communication is reduced thereby reducing the load of communication.

Furthermore, the main server unit 300 is made responsible for information retrieval and adapted to retrieve information on the travel route and acquire it as route information. With this arrangement, the configuration of the terminal unit 400 can be simplified so that the terminal unit 400 itself can be downsized and mounted without difficulty on a moving body such as a vehicle having small space for such a unit.

### [Modification of Embodiment]

The present invention is by no means limited to the above-described embodiment, which may be modified in various different ways without departing from the scope of the present invention.

While the moving body is a vehicle in the above description, the present invention can be applied to any moving body that may be an airplane or a ship. Additionally, a mobile phone or a PHS (Personal Handyphone System) may be used as terminal unit 400 that can be carried by the user, while the base station of the mobile phone or the PHS may be used as main server unit 300. With this arrangement, the mobile phone or the PHS is adapted to acquire information from the base station.

While acquisition of information from a navigation system 100 adapted to provide guidance according to the travel condition of the vehicle is described above, the present invention is by no means limited to the navigation system 100. Instead, it may be so arranged that various pieces of information is acquired from a personal computer.

Then, information may be retrieved and acquired not only by way of telecommunication but also directly from recording medium such as drives and drivers. Thus, a recording medium may be removably mounted on the terminal unit 400 and made to store hierarchical information so that retrieval information may be read from the recording medium and desired information may be retrieved according to the retrieval information that has been read. With this arrangement, drives that directly read information operate as reading section and drivers that convert the respective pieces of information read by the drives operate as retrieval information acquiring section for acquiring retrieval information. Then, various recording medium that require the use of different information retrieving methods may be used to enhance the general purpose character of a navigation system. Such a system may be adapted to retrieve information recorded hierarchically on recording mediums only by means of displayed lists or by means of a displayed numeric keypad template.

Pieces of information of any of the lower layers are acquired sequentially after acquiring information of the first layer in the above-described embodiment. However, it may alternatively be so arranged that all necessary pieces of information are acquired collectively and stored temporarily in the terminal unit 400 and the acquired data are retrieved thereafter. With such an arrangement, only a single communicating operation is required to acquire information. Once the necessary information is acquired, the operation of retrieving information can be conducted at high speed.

Retrieval forms that can be used for the purpose of the present invention are not limited to the list screens 510, 520, 540, 560, the numeric keypad screen 530 and the letter input screen 550 described above. Other retrieval forms may equally be used for the purpose of the invention.

While the present invention is described above in terms of retrieving map information, the present invention is equally applicable to retrieval of other types of information including music data, image data and programs for controlling various operations.

While information on the current position of a moving body that is recognized by the current position recognizing section 481 is acquired on the basis of the output data of the various sensors 431 through 433 and the GPS data output from the GPS receiving section 420 in the above described embodiment, any other arrangement may alternatively be used to recognize the current position of a moving body.

On the other hand, while the above described embodiment is so configured that several travel routes selected on the basis of information on the current position, information on the destination and information on the specified items are transmitted to the user, it may alternatively be so configured that travel routes are detected only on the basis of information on the current position and information on the destination and all the detected travel routes are transmitted to the terminal unit 400 so that the user can select one by inputting and specifying it at the operation section 440 of the terminal unit 400. The arrangement of transmitting only a limited number of travel routes to the terminal unit 400 reduces the load of transmission and also alleviates the cumbersome operation of forcing the user to select a travel route out of a large number of travel routes to a great convenience on the part of the user.

The retrieval form acquiring section 483, the information choosing section 484 and the display control section 486 are provided as programs of system control section 480. However, they may alternatively be provided as hardware comprising circuit substrates or a single IC (Integrated Circuit). Still alternatively, they may be provided as program that can be read by way of the main server unit 300, or as recording medium that readably and operably stores the program to realize them. With this arrangement, the use of program or a recording medium provides an advantage of easy handling and hence that of broadening the scope of utilization. A similar statement may apply to the system control section 480 that operates as arithmetic section for the purpose of the invention. In other words, according to the invention, an arithmetic section may be a single personal computer, a combination of a plurality of computers that are combined to form a network, an element such as a microcomputer or a circuit substrate on which a plurality of electronic parts are mounted.

In place of retrieving information from the main server unit 300, a recording medium that is to be removably mounted on the terminal unit 400 and stores information to be retrieved may be made deliverable.

While the terminal unit 400 is provided with a terminal communication section 410 in the above description, the terminal communication section 410 may be separated from the terminal unit 400 and a mobile phone or a PHS that is connected to the terminal unit 400 may be used as terminal communication section 410 so that information may be exchanged between them. Alternatively, it may be so arranged that information is retrieved at the terminal unit 400 without using communication in a manner as described above.

Thus, the above-described embodiment can be modified appropriately in terms of configuration and operating procedures without departing from the scope of the present invention.

## Claims

1. A recording medium comprising:
a plurality of pieces of information stored hierarchically; and
various pieces of retrieval information so related to said plurality of pieces of information pieces of information as to be used for acquiring pieces of information belonging to lower layers of hierarchy.

2. The recording medium according to claim 1, wherein
said information is map information.

3. The recording medium according to claim 1 or 2, wherein
said pieces of retrieval information correspond to various retrieval forms to be used to prompt a user to select the piece of information belonging to lower layers of hierarchy by means of input operations and adapted to acquire any of the retrieval forms.

4. The recording medium according to claim 3, wherein
said retrieval forms include a list form for displaying a list of pieces of information belonging to lower layers of hierarchy in order to prompt the user to select any of said pieces of information and an input plate form for prompting the user to input a specific piece of information included in said pieces of information in order to select a piece of information belonging to a lower layer of hierarchy.

5. The recording medium according to claim 4, wherein
said information is map information; and
said list form is designed to display a list of proper names of the areas contained in the map information.

6. The recording medium according to claim 4 or 5, wherein
said information is map information; and
said input plate form includes at least a letter template for specifying and inputting at least one of the Japanese alphabet letters or the English alphabet letters to be used to input information on the proper name of an area contained in the map information or a numeric keypad template for inputting proper numerical information relating to the house-number.

7. An information retrieving device comprising:
a reading section removably carrying a recording medium hierarchically storing pieces of information and adapted to read information recorded on the recording medium as defined in any of claims 1 through 6;
a retrieval information acquiring section for acquiring pieces of retrieval information stored on said recording medium as a result of reading operation of the reading section;
a retrieval form acquiring section for acquiring information on retrieval forms related to the acquired pieces of retrieval information and adapted to prompt a user to select pieces of information belonging to lower layers of hierarchy by means of input operations; and
an information selecting section adapted to recognize the pieces of information belonging to lower layers of hierarchy and selected as a result of the input operations using the retrieval forms contained in the acquired retrieval form information and acquire said pieces of information belonging to lower layers of hierarchy in response to the reading operation of said reading section.

8. The information retrieving device according to claim 7, further comprising:
a display device adapted to display various pieces of information; and
a display control section for causing said display device to display retrieval forms according to the information on retrieval forms acquired by said retrieval form acquiring section and adopted to prompt to the user to select said pieces of information belonging to lower layers of hierarchy by means of input operations.

9. An information retrieving device for retrieving and acquiring a plurality of pieces of information stored hierarchically in a memory section, comprising:
a retrieval information acquiring section for acquiring various pieces of retrieval information related to said pieces of information in order to acquire pieces of information stored in said memory section and belonging to lower layers of hierarchy;
a retrieval form acquiring section for acquiring information on retrieval forms related to the acquired pieces of retrieval information and adapted to prompt a user to select pieces of information belonging to lower layers of hierarchy by means of input operations; and
an information selecting section adapted to recognize the pieces of information belonging to lower layers of hierarchy and selected as a result of the input operations using the retrieval forms contained in the acquired retrieval form information and acquire corresponding pieces of information belonging to lower layers of hierarchy.

10. The information retrieving device according to claim 9, wherein
said memory section stores retrieval information so as to be rewritable to other retrieval information on different retrieval forms.

11. The information retrieving device according to claim 9 or 10, wherein
said memory section stores pieces of information having a data structure in which the pieces of information are related to each other in such a way that a piece of information can be selected by using any of various retrieval forms.

12. The information retrieving device according to any of claims 9 through 11 wherein
said retrieval forms include a list form adapted to display a list of pieces of information belonging to a lower layer of hierarchy and prompt the user to select one of pieces and an input plate form adapted to prompt the user to input proper information of one of the pieces contained in said information in order to select the corresponding piece of information belonging to the lower layer of hierarchy.

13. The information retrieving device according to any of claims 9 through 12, wherein
said information is map information.

14. The information retrieving device according to claim 12, wherein
said information is map information; and
said list form displays a list of proper names of the areas contained in the map information.

15. The information retrieving device according to claim 12 or 14, wherein
said information is map information; and
said input plate form includes at least a letter template for specifying and inputting at least one of the Japanese alphabet letters or one of the English alphabet letters to be used to input information on the proper name of an area contained in the map information or a numeric keypad template for inputting proper numerical information relating to the house-number.

16. The information retrieving device according to any of claims 9 through 15, further comprising:
a display device adapted to display various pieces of information; and
a display control section for causing said display device to display retrieval forms according to the information on retrieval forms acquired by said retrieval form acquiring section and adopted to prompt to the user to select said pieces of information belonging to lower layers of hierarchy by means of input operations..

17. An information retrieving system comprising:
a memory section hierarchically storing a plurality of pieces of information; and
an information retrieving device defined in any of claims 9 through 16 and connected to the memory section by way of a network to retrieve and acquire information stored in said memory section.

18. An information retrieving system comprising:
a memory section hierarchically storing a plurality of pieces of information;
a terminal unit having an input section for specifying and inputting various pieces of information by input operations and a display device adapted to display various pieces of information; and
a server unit having a memory section connected to the terminal unit by way of a network so as to be able to transmit and receive various pieces of information and hierarchically storing a plurality of pieces of information, a retrieval information acquiring section for acquiring various pieces of retrieval information related to said pieces of information in order to acquire pieces of information stored in said memory section and belonging to lower layers of hierarchy, a retrieval form acquiring section for acquiring information on retrieval forms related to the acquired pieces of retrieval information and adapted to prompt a user to select pieces of information belonging to lower layers of hierarchy by means of input operations, a display control section for causing the display device of the terminal unit to display the acquired retrieval form and an information selecting section adapted to recognize the pieces of information belonging to lower layers of hierarchy and selected as a result of the input operations using the retrieval forms displayed on the display device and display corresponding pieces of information belonging to lower layers of hierarchy to the display device.

19. An information retrieving method comprising:
reading various pieces of retrieval information contained in the pieces of information stored hierarchically in a recording medium as defined in any of claims 1 through 6 and adapted to be used to acquire pieces of information belonging to lower layers of hierarchy;
acquiring various retrieval forms related to the read pieces of retrieval information so to be used to prompt a user to select pieces of information belonging to lower layers of hierarchy by means of input operations; and
recognizing the pieces of information belonging to lower layers of hierarchy and selected as a result of the input operations using the retrieval forms and acquiring corresponding pieces of information belonging to lower layers of hierarchy from said recording medium.

20. An information retrieving method for retrieving and acquiring a plurality of pieces of information hierarchically stored by an arithmetic section comprising:
acquiring various pieces of retrieval information related to said pieces of information so as to be used to acquire pieces of information belonging to lower layers of hierarchy;
acquiring retrieval form information on various retrieval forms related to the acquired pieces of retrieval information so to be used to prompt a user to select pieces of information belonging to lower layers of hierarchy by means of input operations; and
recognizing the pieces of information belonging to lower layers of hierarchy and selected as a result of the input operations using the retrieval forms of the acquired retrieval form information and acquiring corresponding pieces of information belonging to lower layers of hierarchy.

21. An information retrieving program for causing an arithmetic section to execute an information retrieving method as defined in claim 19 or 20.

22. A recording medium readably storing an information retrieving program as defined in claim 21 so as to be read by an arithmetic section.
